# EUROPÄISCHE PATENTSCHRIFT

(11) **EP 1 446 705 B1**
(45) Veröffentlichungstag und Bekanntmachung des Hinweises auf die Patenterteilung: **27.12.2006**
(21) Anmeldenummer: 02772074.7
(22) Anmeldetag: 19.09.2002
(51) Int. Cl.: G05B 13/02, F02D 41/30, F02D 41/24

(54) **VORRICHTUNG ZUR KORREKTUR EINES SIGNALS**
SIGNAL CORRECTION DEVICE
DISPOSITIF DE CORRECTION D'UN SIGNAL

(30) Priorität: 25.10.2001 DE 10152148; 07.09.2002 DE 10241557
(43) Veröffentlichungstag der Anmeldung: 18.08.2004
(73) Patentinhaber: ROBERT BOSCH GMBH, 70442 Stuttgart (DE)
(72) Erfinder: LEDERER, Dieter, 71634 Ludwigsburg (DE); PFEIL, Michael, 71701 Schwieberdingen (DE)
(86) Internationale Anmeldenummer: PCT/DE2002/003516
(87) Internationale Veröffentlichungsnummer: WO 2003/038532

(56) Entgegenhaltungen:
- DE-A- 3 341 015
- DE-A- 4 105 740
- DE-A- 19 936 269

## Beschreibung

### Stand der Technik

Aus der US-A 4,584,982 ist eine gattungsgemäße Vorrichtung bekannt, die eine Korrektur eines Signals beschreibt, das als Kraftstoffzumess-Signal zum Betreiben einer Brennkraftmaschine verwendet ist. Ziel ist beispielsweise das Erreichen eines vorgegebenen Kraftstoff-/Luftverhältnisses (Lambda), um einerseits einen möglichst geringen Kraftstoffverbrauch und andererseits eine Abgaszusammensetzung zu erhalten, die von giftigen Bestandteilen weitgehend befreit werden kann. Vorgesehen sind unterschiedliche Korrekturgrößen, die sich auf die Kompensation unterschiedlicher Fehler richten.
Ein solcher Fehler ist beispielsweise eine Fehlmessung eines Luftmassensensors, die sich multiplikativ auf die Kraftstoffzumessung auswirkt. Ein anderer Fehler sind beispielsweise Lecklufteinflüsse, die additiv auf die Kraftstoffzumessung einwirken. Weiterhin können Fehler bei den eingesetzten Kraftstoffeinspritzventilen auftreten, die insbesondere durch Schaltverzögerungen verursacht sind. Diese Fehler wirken sich ebenfalls additiv aus. Derartige systematische Fehler werden durch die Korrekturgrößen in ihrer Auswirkung korrigiert.
Die Fehler wirken sich in unterschiedlichem Last-/Drehzahlbereichen der Brennkraftmaschine unterschiedlich aus. Additive Fehler treten bevorzugt im unteren Last-Drehzahl-Bereich auf und multiplikative Fehler insbesondere im mittleren Last-Drehzahl-Bereich.

Nach gesetzlichen Vorschriften sollen abgasrelevante Fehler mit bordeigenen Mitteln erkannt und angezeigt werden. Die Korrektur kann diese Aufgabe mit übernehmen. Liegt beispielsweise der Korrektureingriff oberhalb oder unterhalb einer zulässigen Schwelle, so deutet dies auf einen Fehler hin. Um ein optimales Zusammenwirken der verschiedenen Brennkraftmaschinensteuerungs- und Diagnosefunktionen zu gewährleisten, wird die Korrektur phasenweise mittels einer Zeit- und/oder Ereignissteuerung freigegeben.

Aus der DE-A 198 50 586 ist ein Programm zur Steuerung einer Brennkraftmaschine bekannt geworden, das die Umschaltung zwischen einem Schichtbetrieb und einem Homogenbetrieb bei einer direkt einspritzenden Brennkraftmaschine vorsieht.

Im Schichtbetrieb wird die Brennkraftmaschine mit einer geschichteten Zylinderladung und hohem Luftüberschuss betrieben, um einen möglichst niedrigen Kraftstoffverbrauch zu erreichen. Bei höherer Last wird die Brennkraftmaschine dagegen mit einer homogenen Zylinderfüllung betrieben, um eine möglichst hohe Leistung bereit stellen zu können. Da die Korrektur für das Signal auf einer Stellgröße beruht, die aus dem Signal einer Lambdasonde ermittelt ist, muss zumindest während der Korrektur ein ordnungsgemäßes Lambdasondensignal vorliegen. Im kraftstoffsparenden Schichtbetrieb der direkteinspritzenden Brennkraftmaschine, bei dem ein hoher Luftüberschuss auftritt, ist das Signal der Lambdasonde aufgrund des hohen Luftüberschusses aber nicht immer zuverlässig. Die Korrektur erfolgt daher zweckmäßiger Weise nur während des Homogenbetriebs. Falls eine Korrekturphase vorgesehen ist und sich die Brennkraftmaschine derzeit im Schichtbetrieb befindet, wird zu Beginn der Korrektur in den Homogenbetrieb umgeschaltet. Im Hinblick auf die Optimierung des Kraftstoffverbrauchs ist eine möglichst kurze Zeitdauer der Korrektur anzustreben.

Während der Zeitdauer der Korrektur können sich weitere Zielkonflikte mit anderen Steuerungsfunktionen ergeben. Eine solche Funktion ist beispielsweise eine Tankentlüftung, die einen Einfluss auf das zu korrigierende Signal ausübt und daher während der Zeitdauer der Korrektur nicht aktiviert werden kann. Auch aus solchen Gründen soll die Zeitdauer der Korrektur optimiert werden.

Die Aufgabe wird durch die im unabhängigen Anspruch angegebenen Merkmale gelöst.

### Vorteile der Erfindung

Erfindungsgemäß ist zunächst eine Korrektursignalermittlung vorgesehen, die wenigstens ein Korrektursignal zumindest aus einem Eingangssignal oder einer Stellgröße eines Reglers ermittelt. Das zu korrigierende Signal beeinflusst das Eingangssignal des Reglers, der die Stellgröße bereit stellt, die identisch mit dem zu korrigierenden Signal sein kann oder die zumindest das zu korrigierende Signal beeinflusst.
Eine vorgesehene Signalbewertung ermittelt weiterhin eine Kenngröße der Eingangsgröße und/oder der Stellgröße des Reglers und/oder des wenigstens einen ermittelten Korrektursignals und /oder deren Mittelwert und vergleicht die gewonnene Kenngröße mit wenigstens einem Schwellenwert. Bei Erreichen oder Durchschreitung des Schwellenwerts gibt die Signalbewertung ein Abschaltsignal aus, das die Ermittlung des Korrektursignals beendet.

Ein wesentlicher Vorteil der erfindungsgemäßen Vorrichtung ist die Möglichkeit der Beendigung der Korrektur bei Vorliegen von vorgegebenen Kriterien. Die für die Korrektur benötigte Zeit wird auf das notwendige Maß verringert. Somit steht mehr Zeit für andere Funktionen, wie die beispielsweise eingangs genannte Tankentlüftung oder das Betreiben der Brennkraftmaschine im kraftstoffsparenden Schichtbetrieb zur Verfügung.

Vorteilhafte Weiterbildungen und Ausgestaltungen ergeben sich aus abhängigen Ansprüchen.

Gemäß einer ersten Ausgestaltung ist die Kenngröße identisch entweder mit dem Eingangssignal, der Stellgröße, dem Korrektursignal und/oder insbesondere deren Mittelwert.

Gemäß einer anderen Ausgestaltung, die alternativ oder zusätzlich zur ersten Ausgestaltung vorgesehen sein kann, entspricht die Kenngröße der Steigung des Eingangssignals und/oder der der Stellgröße und/oder der des Korrektursignals und/oder deren Mittelwert.

Eine vorteilhafte Weiterbildung sieht vor, dass die Steigung nur bewertet wird, wenn das Eingangssignal und/oder die Stellgröße und/oder das Korrektursignal und/oder deren Mittelwert die wenigstens eine vorgegebene Schwelle durchschritten haben.

Eine andere vorteilhafte Weiterbildung sieht vor, dass die Ermittlung des Korrektursignals nur vorgesehen ist, wenn vorgegebene Randbedingungen vorliegen. Solche Randbedingungen sind beispielsweise eine Last und/oder eine Drehzahl und/oder eine Temperatur einer Brennkraftmaschine.

Gemäß einer Ausgestaltung ist eine additive Korrektur des zu korrigierenden Signals vorgesehen. Alternativ oder zusätzlich kann in einer weiteren Ausgestaltung eine multiplikative Korrektur vorgesehen sein.

Eine vorteilhafte Weiterbildung sieht vor, dass nach Durchschreitung der vorgegebenen Schwellenwerte die Ermittlung des Korrektursignals erst nach Ablauf einer vorgegebenen Zeitdauer beendet wird. Mit dieser Weiterbildung kann sichergestellt werden, dass die Korrektur zu einem stabilen Ergebnis geführt hat.

Eine andere vorteilhafte Weiterbildung sieht vor, dass das Eingangssignal und/oder die Stellgröße und/oder das Korrektursignal und/oder deren Mittelwert mit wenigstens einem Grenzwert verglichen werden und dass bei Erreichen oder Durchschreiten des Grenzwerts eine Fehlermeldung erfolgt.

Weitere vorteilhafte Ausgestaltungen und Weiterbildungen der erfindungsgemäßen Vorrichtung ergeben sich aus weiteren abhängigen Ansprüchen und aus der folgenden Beschreibung.

### Zeichnung

Figur 1 zeigt das technische Umfeld der Erfindung,
Figur 2 zeigt die Lage von zwei unterschiedlichen Korrekturbereichen,
Figur 3 zeigt ein Blockschaltbild einer erfindungsgemäßen Vorrichtung und
Figur 4 zeigt Signalverläufe in Abhängigkeit von der Zeit.

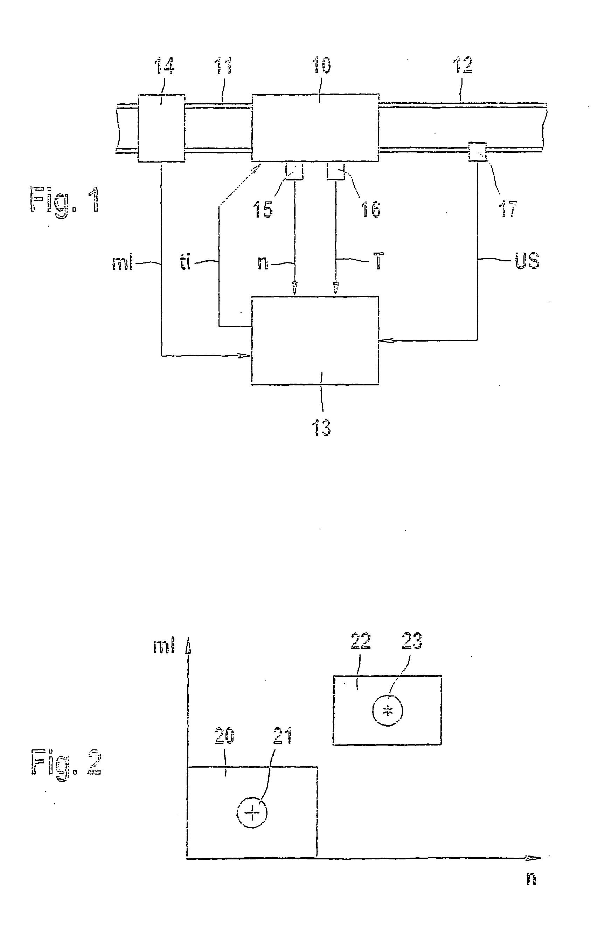

In Figur 1 ist eine Brennkraftmaschine 10 gezeigt, die ein Saugrohr 11 enthält. Ein Steuergerät 13 gibt Kraftstoffzumess-Signale ti in Abhängigkeit von Signalen ab, die von Sensoren 14, 15, 16, 17 bereit gestellt werden.

Der Luftmassen-Sensor 14 liefert dem Steuergerät 13 ein Signal über die von der Brennkraftmaschine 1 angesaugte Luftmasse ml. Der Drehzahlsensor 15 liefert ein Drehzahlsignal n an das Steuergerät 13. Die Temperatur T der Brennkraftmaschine 1 stellt ein Temperatursensor 16 bereit und der Abgassensor 17 liefert ein Sondensignal, das ein Eingangssignal US eines im Steuergerät 13 enthaltenen, in der Figur 1 noch nicht näher gezeigten Reglers ist, über die Abgaszusammensetzung in einem Abgasrohr 12 der Brennkraftmaschine 10.

Aus diesen und gegebenenfalls weiteren Signalen über weitere Betriebskenngrößen der Brennkraftmaschine 10 ermittelt das Steuergerät 13 neben weiteren Stellgrößen die Kraftstoffzumess-Signale ti, so dass sich ein gewünschtes Verhalten der Brennkraftmaschine 10, insbesondere eine gewünschte Abgaszusammensetzung, ergibt.

Figur 2 gibt die Lage von zwei Korrekturbereichen in Abhängigkeit von der Luftmasse ml und des Drehzahlsignals n an. Ein erster Last-/Drehzahl-Bereich liegt im niedrigen Last- und Drehzahlbereich. Dort findet eine additive Korrektur statt, die im 1. Last-/Drehzahl-Bereich 20 durch ein Additionsglied 21 symbolisch angegeben ist. Ein zweiter Last-/Drehzahl-Bereich 22 liegt im höheren Last- und Drehzahl-Bereich. Dort ist eine multiplikative Korrektur vorgesehen, die durch ein Multiplikationsglied 23 symbolisch angegeben ist.

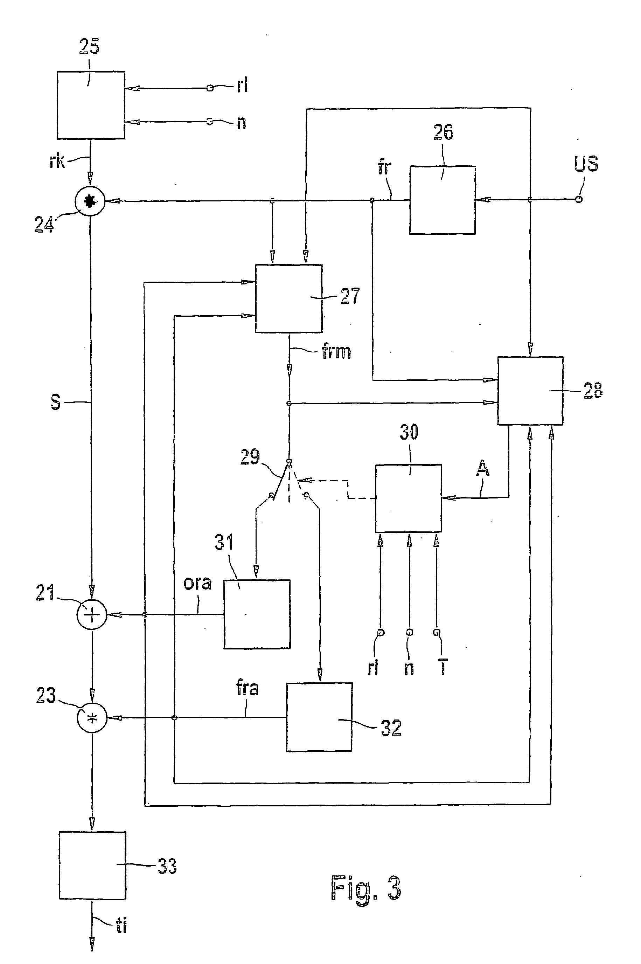

Figur 3 zeigt ein Blockschaltbild einer erfindungsgemäßen Vorrichtung. Ein zu korrigierendes Signal S wird durch eine Multiplikation 24 aus einem Vorsteuersignal rk und einer Stellgröße fr erhalten. Das Vorsteuersignal rk wird in einer Vorsteuersignalermittlung 25 ermittelt beispielsweise aus dem Drehzahlsignal n und einer relativen Luftfüllung rl, die von der Luftmasse ml abgeleitet werden kann. Die Stellgröße fr stellt ein Regler 26 bereit, der die Stellgröße fr aus dem Eingangssignal US gewinnt.

Das Eingangssignal US wird neben dem Regler 26 einem Mittelwertbildner 27 sowie einer Signalbewertung 28 zugeleitet. Die Stellgröße fr, die an die Multiplikation 24 gelangt, wird weiterhin ebenfalls der Signalbewertung 28 zugeführt.

Der Mittelwertbildner 27 ermittelt zumindest einen Stellgrößenmittelwert frm, der sowohl der Signalbewertung 28 als auch einem Umschalter 29 zugeführt ist. Neben dem Stellgrößenmittelwert frm ermittelt der Mittelwertbildner 27 gegebenenfalls weitere, in der Figur 3 nicht eingetragene Mittelwerte.

Der Umschalter 29 ist von einer Schaltersteuerung 30 angesteuert, die als Eingangssignale die relative Luftmasse rl, das Drehzahl-Signal n, die Temperatur T sowie ein Ausgangssignal A der Signalbewertung 28 zugeführt erhält. Der Umschalter 29 ist mit einer ersten und zweiten Korrektursignal-Ermittlung 31, 32 verbindbar sowie in eine Neutralstellung schaltbar.

Die erste Korrektursignalermittlung 31 gibt ein erstes Korrektursignal ora an das aus Figur 2 bekannte Additionsglied 21, an den Mittelwertbildner 27 und an die Signalbewertung 28 ab. Die zweite Korrektursignalermittlung 32 gibt ein zweites Korrektursignal fra an das aus Figur 2 bekannte Multiplikationsglied 23, an den Mittelwertbildner 27 und ebenfalls an die Signalbewertung 28 ab.

Das über das Additionsglied 21 und das Multiplikationsglied 23 korrigierte Signal S gelangt an einen Signalumsetzer 33, der die Kraftstoffzumess-Signale ti bereit stellt.

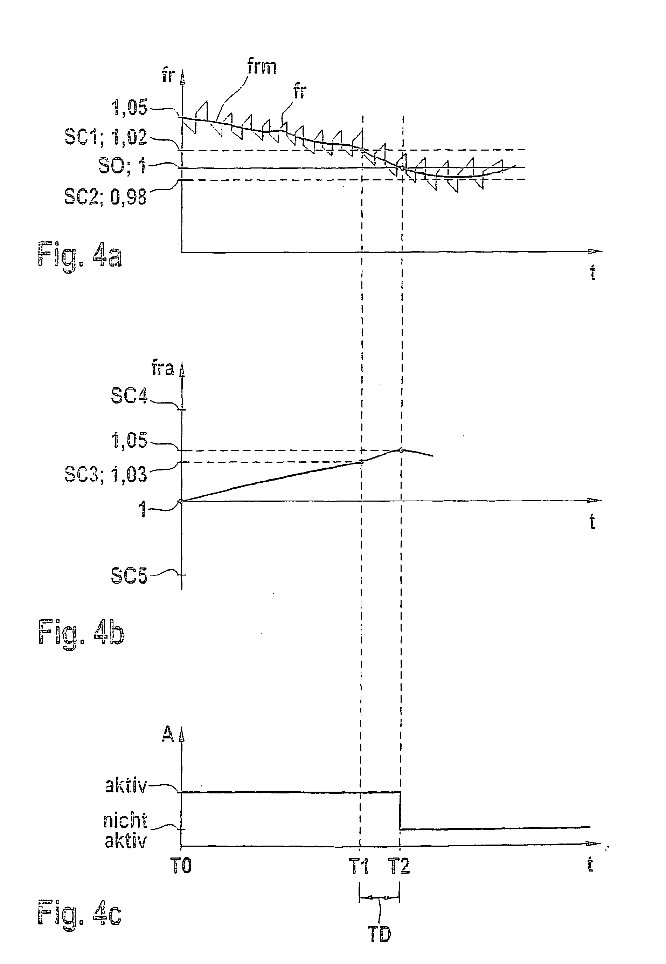

Figur 4 zeigt Signalverläufe in Abhängigkeit von der Zeit t. Figur 4a zeigt die Stellgröße fr und den Stellgrößenmittelwert frm. SO ist ein Sollwert der Stellgröße fr, der den Wert 1 aufweisen soll. Eingetragen sind die Werte 1,05 sowie 1,02 des Stellgrößenmittelwerts frm. Der Wert 1,02 des Stellgrößenmittelwerts frm entspricht einem ersten Schwellenwert SC1. Weiterhin eingetragen ist ein zweiter Schwellenwert SC2, dem der Wert 0,98 zugeordnet ist.

Figur 4b zeigt die 2. Korrekturgröße fra. Hervorgehoben sind die Werte 1 und 1,03 sowie 1,05 der zweiten Korrekturgröße fra. Der Wert 1,03 entspricht einem dritten Schwellenwert SC3. Weiterhin eingetragen sind ein erster und zweiter Grenzwert SC4, SC5.

Figur 4c zeigt das Ausgangssignal A in Abhängigkeit von der Zeit t. Das Ausgangssignal A kann den Wert "aktiv" oder "nicht aktiv" aufweisen. Hervorgehoben ist ein neben dem Startzeitpunkt T0 ein erster Zeitpunkt T1, bei dem der Stellgrößenmittelwert frm den ersten Schwellenwert SC1 sowie die zweite Korrekturgröße fra den dritten Schwellenwert SC3 erreichen. Hervorgehoben ist weiter ein zweiter Zeitpunkt T2, der nach Ablauf einer Zeitdauer TD nach dem ersten Zeitpunkt T1 auftritt.

Die Funktionsweise der als Blockschaltbild in Figur 3 gezeigten Vorrichtung wird anhand der in Figur 4 gezeigten Signalverläufe erläutert:

Ein Ziel der Vorrichtung ist es, die Kraftstoffzumess-Signale ti im Signalumsetzer 33 derart festzulegen, dass im Abgasrohr 12 der Brennkraftmaschine 10 beispielsweise eine gewünschte Abgaszusammensetzung auftritt, die sich im Sondensignal bzw. im Eingangssignal US widerspiegelt. Im gezeigten Ausführungsbeispiel soll beispielsweise ein stöchiometrisches Gemisch erhalten werden. Unter Zugrundelegung einer bekannten Lambdasonde als Abgassensor 17 tritt bei einem stöchiometrischen Gemisch beispielsweise eine Spannung von etwa 450 mV auf. Das stöchiometrische Gemisch soll sich auch in der Stellgröße fr des Reglers 26 widerspiegeln. Der Sollwert SO der Stellgröße fr soll deshalb symbolisch den Zahlenwert 1 aufweisen, der einem stöchiometrischen Kraftstoff-/Luftverhältnis entspricht.

Der Signalumsetzer 33 könnte bereits allein aus der Stellgröße fr die Kraftstoffzumess-Signale ti ermitteln. Damit der Regler 26 auf einen handhabbaren Regelbereich hin konzipiert werden kann, ist gegebenenfalls zusätzlich die Vorsteuersignalermittlung 25 vorgesehen, die ebenfalls zur Gewinnung des Signals S beitragen soll. Die Vorsteuersignalermittlung 25 ermittelt beispielsweise anhand von abgelegten Kennlinien aus der relativen Luftfüllung rl und beispielsweise dem Drehzahlsignal n die Vorsteuergröße rk, die mit der Stellgröße fr im Multiplizierer 24 multipliziert wird. Die relative Luftfüllung rl ist auf eine maximale Füllung eines Brennraums der Brennkraftmaschine 10 mit Luft bezogen und gibt damit gewissermaßen den Bruchteil der maximalen Brennraum- oder Zylinderfüllung an. Sie wird im wesentlichen aus der Luftmasse ml gebildet. Die Vorsteuergröße rk entspricht weitgehend der zur relativen Luftfüllung rl zugeordneten Kraftstoffmenge. Die Bildung der Vorsteuergröße rk wurde hier vereinfacht dargestellt.

Neben dieser ersten Beeinflussung des Signals S durch die Vorsteuergröße rk ist eine weitere Korrektur des Signals S mittels der beiden Korrektursignale ora, fra vorgesehen. Die Auftrennung in zwei Korrekturasignale ora, fra weist den Vorteil auf, dass das erste Korrektursignal ora beispielsweise über das Additionsglied 21 additiv auf das Signal S korrigierend einwirkt, während das zweite Korrektursignal fra über das Multiplikationsglied 23 multiplikativ auf das Signal S einwirkt. Selbstverständlich können weitere Korrekturgrößen vorgesehen sein, die in irgend einer Weise einen Einfluss auf das Signal S ausüben.

Wie bereits anhand von Figur 2 erläutert, ist das erste Korrektursignal ora insbesondere zur Korrektur des Signals S im niedrigen Last- und Drehzahlbereich der Brennkraftmaschine 10 zuständig, während das zweite Korrektursignal fra im höheren Last- und Drehzahlbereich der Brennkraftmaschine 10 eingreift.

Die Bildung der Korrektursignale ora, fra hängt vorzugsweise von Betriebsbedingungen ab, die der Schaltersteuerung 30 zugeleitet werden. Es sind dies insbesondere die relative Luftfüllung rl, das Drehzahlsignal n und/oder die Temperatur T der Brennkraftmaschine 10. Neben diesen Betriebskenngrößen können andere oder weitere Kenngrößen vorgesehen sein. Weiterhin wird der Schaltersteuerung 30 das Ausgangssignal A der Signalbewertung 28 zugeleitet, wobei das Ausgangssignal A grundsätzlich dem "aktiven" oder "nicht aktiven" Zustand der Korrektursignalermittlungen 31, 32 vorgibt. Eine solche Korrektursignalermittlung soll anhand Figur 4 erläutert werden:

Die Korrektursignalermittlungen 31, 32 können das Korrektursignal ora, fra beispielsweise unmittelbar aus dem Eingangssignal US ermitteln. Vorzugsweise wird aber die Stellgröße fr verwendet. In Abhängigkeit von an dieser Stelle nicht näher beschriebenen Vorgaben kann eine oszillierende Stellgröße fr - wie in Figur 4a gezeigt - um einen Stellgrößenmittelwert frm vorgesehen sein. Die Stellgrößenermittlungen 31, 32 ermitteln deshalb vorzugsweise die Korrekturgröße ora, fra aus Mittelwerten, insbesondere eines Mittelwerts des Eingangssignals US und/oder vorzugsweise aus dem Stellgrößen-Mittelwert frm. In Figur 3 ist ausschließlich exemplarisch der Stellgrößen-Mittelwert frm am Ausgang des Mittelwertbildners 27 gezeigt.

Diese Auswahl ist auch Figur 4a zu Grunde gelegt.

Angenommen wird, dass das Ausgangssignal A "aktiv" ist und dass anhand der Betriebsbedingungen die Schaltersteuerung den Umschalter 29 derart geschaltet hat, dass der Stellgrößenmittelwert frm der zweiten Korrektursignalermittlung 32 zugeleitet wird. Zum Startzeitpunkt T0 gemäß Figur 4c liege der Stellgrößenmittelwert frm bei einem Zahlenwert von beispielsweise 1,05. Er sollte aber wenigstens näherungsweise bei seinem Sollwert SO, entsprechend dem Zahlenwert 1, liegen. Das erste Korrektursignal fra weist zum Startzeitpunkt T0 den Zahlenwert 1 auf, so dass für diesen Zeitpunkt noch keine Korrektur vorliegen soll. Mit zunehmender Zeit t erfolgt eine Veränderung des ersten Korrektursignals fra, so dass sich in Folge der Stellgrößenmittelwert frm in Richtung des Zahlenwerts bewegt. Zum ersten Zeitpunkt T1 durchschreitet der Stellgrößenmittelwert frm den ersten Schwellenwert SC1, entsprechend dem Zahlenwert 1,02. Zum gleichen ersten Zeitpunkt T1 beträgt der Zahlenwert des zweiten Korrektursignals fra 1,03. Das Erreichen des ersten Schwellenwerts SC1 wird von der Signalbewertung 28 festgestellt.

Die Signalbewertung 28 erhält zunächst das Eingangssignal US und/oder die Stellgröße fr und/oder vorzugsweise wenigstens einen deren Mittelwerte zugeführt. In Figur 3 ist exemplarisch auf die Mittelwertbildung der Stellgröße fr abgestellt, so dass die weitere Beschreibung exemplarisch den Stellgrößenmittelwert frm herausgreift. Die Signalbewertung 28 kennt den ersten und zweiten Schwellenwert SC1, SC2, mit denen der Stellgrößenmittelwert frm verglichen wird. Nach dem Feststellen des Erreichens oder Durchschreitens des ersten Schwellenwerts SC1 durch den Stellgrößenmittelwert frm kann an sich die weitere Bildung des zweiten Korrektursignals fra beendet werden. Um jedoch die weitere Entwicklung der Stellgröße fr oder des Stellgrößenmittelwerts frm in Betracht ziehen zu können, wird vorzugsweise die Korrektursignalermittlung ab dem ersten Zeitpunkt T1 noch für eine vorgegebene Zeitdauer TD bis zum zweiten Zeitpunkt T2 fortgesetzt. Im gezeigten Ausführungsbeispiel erreicht zum zweiten Zeitpunkt T2 der Stellgrößenmittelwert frm (zufällig) genau den Sollwert SO, entsprechend dem Zahlenwert 1. Gleichzeitig steigt während der Zeitdauer TD das zweite Korrektursignal fra vom Zahlenwert 1,03 auf den Zahlenwert 1,05. Im gezeigten Ausführungsbeispiel war deshalb die Korrektur erfolgreich.

In analoger Weise erfolgt bei Vorliegen von entsprechenden Betriebsbedingungen die Ermittlung des ersten Korrektursignals ora in der ersten Konektursignalermittlung 31 durch ein entsprechendes Betätigen des Umschalters 29 durch die Schaltersteuerung 30.

Die Signalbewertung 28 kann neben den Schwellenwerten SC1, SC2 andere Signale mit entsprechend anderen Schwellenwerten vergleichen. Wie bereits erwähnt, kann die Signalbewertung 28 unmittelbar das Eingangssignal US und/oder die Stellgröße fr oder wenigstens einen derer Mittelwerte betrachten. Alternativ oder zusätzlich kann die Signalbewertung 28 auch die gewonnenen Korrektursignale ora, fra selbst und/oder deren Mittelwert für die Auswertung heranziehen. In Figur 3 sind daher die beiden Korrektursignale ora, fra sowohl unmittelbar mit der Signalbewertung 28, als auch indirekt über den Mittelwertbildner 27 mit der Signalbewertung 28 verbunden. Vorzugsweise werden der Signalbewertung 28 jedoch unmittelbar die Korrekturgrößen ora, fra zugeleitet, da sie vorzugsweise aus Integrationsprozessen hervorgehen und deshalb bereits eine Mittelwertbildung hinter sich haben. Zum Vergleich der Korrektursignale ora, fra weist die Signalbewertung 28 den dritten Schwellenwert SC3 auf. Weitere Schwellenwerte können selbstverständlich vorgesehen sein für negative Signalwerte. Weiterhin können weitere Schwellenwerte getrennt für die unterschiedlichen Korrektursignale ora, fra vorgesehen sein.

Eine vorteilhafte Weiterbildung sieht vor, dass die Signalbewertung sämtliche auswertbaren Signale zusätzlich mit vorgegebenen Grenzwerten vergleicht. Im gezeigten Ausführungsbeispiel gemäß Figur 4d sind zwei solcher Grenzwerte, der erste und zweite Grenzwert SC4, SC5, eingetragen, mit dem exemplarisch die zweite Korrekturgröße fra verglichen wird. Bei einem Erreichen oder durchschreiten eines Grenzwerts SC4, SC5, gibt die Signalbewertung 28 neben dem Schaltsignal A, das auf "nicht aktiv" geschaltet wird, zusätzlich eine Fehlermeldung aus, die für eine bordeigene andere Signalbewertung herangezogen werden kann.

Bislang beschrieben wurde die Verarbeitung der einzelnen Signale, insbesondere die des Eingangssignals US, der Stellgröße fr, eines Mittelwerts, des ersten und des zweiten Korrektursignals fra. Alternativ oder zusätzlich kann insbesondere die Steigung der einzelnen Kurvenverläufe in der Signalbewertung 28 herangezogen werden. Vorzusehen sind für die Steigung des wenigstens einen auszuwertenden Signals die dazu passenden Schwellenwerte und Grenzwerte. Allgemein wertet also die Signalbewertung 28 Kenngrößen des Eingangssignals US und/oder der Stellgröße fr und/oder des Korrektursignals ora, fra oder wenigstens eines ihrer Mittelwerte aus.

Eine vorteilhafte Weiterbildung sieht vor, dass die Steigung als Kenngröße nur dann herangezogen wird, wenn das Eingangssignal US und/oder die Stellgröße fr und/oder das Korrektursignal ora, fra oder einer deren Mittelwerte wenigstens einen Schwellenwert erreicht oder durchschritten haben. Mit dieser Maßnahme kann ergänzend oder alternativ zu der vorgegebenen Zeitdauer TD die Adaption innerhalb der kürzest möglichen Zeit zu einem erfolgreichen Abschluss gebracht werden. Weiterhin sind mit dieser Maßnahme weitergehende Diagnosen hinsichtlich von Grenzwertüberschreitungen möglich, die Anlass zu einer Fehlermeldung geben.

Nach dem Beenden der Ermittlung des Korrektursignals ora, fra wird das Korrektursignal ora, fra auf dem zuletzt ermittelten Wert so lange festgehalten bis ein erneuter Korrekturvorgang beginnt.

Die beschriebenen Funktionen und Abläufe in der erfindungsgemäßen Vorrichtung können teilweise oder vollständig als Software realisiert sein.

## Patentansprüche

1. Vorrichtung zur Korrektur eines Signals (S), das von einer Stellgröße (fr) beeinflusst ist, die ein Regler (26) aus einem Eingangssignal (US) ermittelt, mit einer Korrektursignalermittlung (31, 32), die wenigstens ein Korrektursignal (ora, fra) aus dem Eingangssignal (US) und/oder der Stellgröße (fr) und/oder wenigstens einem derer Mittelwerte ermittelt, und mit einem Additions- und/oder Multiplikationsglied (21, 23), welches das Korrektursignal (ora, fra) mit dem Signal (S) verknüpft, **dadurch gekennzeichnet, dass** eine Signalbewertung (28) vorgesehen ist, die eine Kenngröße des Eingangssignals (US) und/oder der Stellgröße (fr) und/oder des Korrektursignals (ora, fra) und/oder wenigstens einen deren Mittelwerte ermittelt, mit wenigstens einem Schwellenwert (SC1,SC2,SC3) des Eingangssignals (US) und/oder der Stellgröße (fr) und/oder des Korrektursignals (ora,fra) und/oder einem deren Mittelwerte vergleicht und bei Erreichen oder einer Durchschreitung des wenigstens einen Schwellenwerts (SC1, SC2, SC3) ein Ausgangssignal (A) bereitstellt zum Beenden der Ermittlung des Korrektursignals (ora, fra).

2. Vorrichtung nach Anspruch 1, **dadurch gekennzeichnet, dass** die Kenngröße identisch ist mit dem Eingangssignal (US) oder der Stellgröße (fr) oder des Korrekturwerts (ora, fra) oder deren Mittelwert.

3. Vorrichtung nach Anspruch 1 oder 2, **dadurch gekennzeichnet, dass** die Kenngröße die Steigung des Eingangssignals (US) oder der Stellgröße (fr) oder des Korrekturwerts (ora, fra) oder deren Mittelwert ist.

4. Vorrichtung nach Anspruch 2 und 3, **dadurch gekennzeichnet, dass** die Steigung nur herangezogen ist, wenn das Eingangssignal (US) oder die Stellgröße (fr) oder die Korrekturgröße (ora, fra) oder deren Mittelwert den wenigstens einen Schwellenwert (SC1, SC2, SC3) erreicht oder durchschreitet.

5. Vorrichtung nach einem der vorhergehenden Ansprüche, **dadurch gekennzeichnet, dass** die Ermittlung der Korrekturgröße (ora, fra) vorgesehen ist beim Vorliegen vorgegebener Randbedingungen.

6. Vorrichtung nach Anspruch 5, **dadurch gekennzeichnet, dass** eine Randbedingung eine relative Luftfüllung (r1) und/oder die Drehzahl (n) und/oder die Temperatur einer Brennkraftmaschine (10) ist.

7. Vorrichtung nach einem der vorhergehenden Ansprüche, **dadurch gekennzeichnet, dass** eine erste Korrekturgröße (ora) ermittelt ist, die über das Additionsglied (21) mit dem Signal (S) verknüpft ist.

8. Vorrichtung nach einem der Ansprüche 1 bis 6, **dadurch gekennzeichnet, dass** die Ermittlung einer zweiten Korrekturgröße (fra) vorgesehen ist, die über das Multiplikationsglied (23) mit dem Signal (S) verknüpft ist.

9. Vorrichtung nach einem der vorhergehenden Ansprüche, **dadurch gekennzeichnet, dass** nach dem Erreichen oder nach dem Durchschreiten des Schwellenwerts (SC1, SC2, SC3) die Ermittlung der Korrekturgröße (ora, fra) für eine vorgegebene Zeitdauer (TD) vorgesehen ist.

10. Vorrichtung nach einem der vorhergehenden Ansprüche, **dadurch gekennzeichnet, dass** ein Vergleich der Kenngröße des Eingangssignals (US) und/oder der Stellgröße (fr) und/oder des Korrektursignals (ora, fra) und/oder wenigstens einem deren Mittelwerte mit wenigstens einem Grenzwert (SC4, SC5) des Eingangssignals (US) und/oder der Stellgröße (fr) und/oder des Korrektursignals (ora, fra) und/oder einem deren Mittelwerte vorgesehen ist und dass beim Erreichen oder Durchschreiten des Grenzwerts (SC4, SC5) eine Fehlermeldung erfolgt.

## Claims

1. Device for correcting a signal (S) which is influenced by a manipulated variable (fr) which a controller (26) acquires from an input signal (US), having a correction signal acquiring means (31, 32) which acquires at least one correction signal (ora, fra) from the input signal (US) and/or the manipulated variable (fr) and/or at least one of their mean values, and having an adder element (21) and/or multiplier element (23) which logically combines the correction signal (ora, fra) with the signal (S), **characterized in that** a signal evaluation means (28) is provided which acquires a characteristic variable of the input signal (US) and/or of the manipulated variable (fr) and/or of the correction signal (ora, fra) and/or at least one of their mean values and compares it with at least one threshold value (SC1, SC2, SC3) of the input signal (US) and/or of the manipulated variable (fr) and/or of the correction signal (ora, fra) and/or one of their mean values, and, when the at least one threshold value (SC1, SC2, SC3) is reached or exceeded, makes available an output signal (A) for terminating the acquisition of the correction signal (ora, fra).

2. Device according to Claim 1, **characterized in that** the manipulated variable is identical with the input signal (US) or the manipulated variable (fr) or the correction value (ora, fra) or the mean value thereof.

3. Device according to Claim 1 or 2, **characterized in that** the manipulated variable is the positive gradient of the input signal (US) or the manipulated variable (fr) or the correction value (ora, fra) or the mean value thereof.

4. Device according to Claims 2 and 3, **characterized in that** the positive gradient is used only if the input signal (US) or the manipulated variable (fr) or the correction variable (ora, fra) or the mean value thereof reaches or exceeds the at least one threshold value (SC1, SC2, SC3).

5. Device according to one of the preceding claims, **characterized in that** there is provision for the correction variable (ora, fra) to be acquired when predefined peripheral conditions are met.

6. Device according to Claim 5, **characterized in that** a peripheral condition is a relative air charge (rl) and/or the rotational speed (n) and/or the temperature of an internal combustion engine (10).

7. Device according to one of the preceding claims, **characterized in that** a first characteristic variable (ora) is acquired and is logically combined with the signal (S) by means of the adder element (21).

8. Device according to one of Claims 1 to 6, **characterized in that** there is provision for a second correction variable (fra) to be acquired, said correction variable being logically combined with the signal (S) by means of the multiplier element (23).

9. Device according to one of the preceding claims, **characterized in that** there is provision for the correction variable (ora, fra) to be acquired for a predefined time period (TD) after the threshold value (SC1, SC2, SC3) has been reached or exceeded.

10. Device according to one of the preceding claims, **characterized in that** there is provision for the characteristic variable of the input signal (US) and/or the manipulated variable (fr) and/or the correction signal (ora, fra) and/or at least one of the mean values thereof to be compared with at least one limiting value (SC4, SC5) of the input signal (US) and/or the manipulated variable (fr) and/or the correction signal (ora, fra) and/or one of the mean values thereof, and **in that** a fault message is issued when the limiting value (SC4, SC5) is reached or exceeded.

## Revendications

1. Dispositif de correction d'un signal (S) influencé par une grandeur de réglage (fr) calculée par un régulateur (26) à partir d'un signal d'entrée (US), comprenant un moyen de détermination de signal de correction (31, 32) fournissant au moins un signal de correction (ora, fra) à partir du signal d'entrée (US) et/ou de la grandeur de réglage (fr) et/ou au moins à partir d'une de leur valeur moyenne, et
un élément d'addition et/ou de multiplication (21, 22) qui combine le signal de correction (ora, fra) au signal (S),
**caractérisé en ce qu'**
un moyen d'évaluation de signal (28) détermine une grandeur caractéristique du signal d'entrée (US) et/ou de la grandeur de réglage (fr) et/ou du signal de correction (ora, fra) et/ou une de leur valeur moyenne, la compare à au moins une valeur de seuil (SC1, SC2, SC3) du signal d'entrée (US) et/ou de la grandeur de réglage (fr) et/ou du signal de correction (ora, fra) et/ou une de leur valeur moyenne, et
lorsqu'on atteint ou dépasse au moins une valeur de seuil (SC1, SC2, SC3), fournit un signal de sortie (A) pour terminer la détermination du signal de correction (ora, fra).

2. Dispositif selon la revendication 1,
**caractérisé en ce que**
la grandeur caractéristique est identique au signal d'entrée (US) ou à la grandeur de réglage (fr) ou à la valeur de correction (ora, fra) ou à leur valeur moyenne.

3. Dispositif selon l'une quelconque des revendications 1 ou 2,
**caractérisé en ce que**
la grandeur caractéristique est la pente du signal d'entrée (US) ou de la grandeur de réglage (fr) ou de la valeur de correction (ora, fra) ou de leur valeur moyenne.

4. Dispositif selon l'une quelconque des revendications 1 et 2,
**caractérisé en ce que**
la pente n'est utilisée que si le signal d'entrée (US) ou la grandeur de réglage (fr) ou la grandeur de correction (ora, fra) ou leur valeur moyenne atteint ou dépasse au moins une valeur de seuil (SC1, SC2, SC3).

5. Dispositif selon l'une quelconque des revendications précédentes,
**caractérisé en ce que**
la détermination des grandeurs de correction (ora, fra) se fait si des conditions limites, prédéterminées existent.

6. Dispositif selon la revendication 5,
**caractérisé en ce qu'**
une condition aux limites est le remplissage relatif d'air (rl) et/ou la vitesse de rotation (n) et/ou la température d'un moteur à combustion (10).

7. Dispositif selon l'une quelconque des revendications précédentes,
**caractérisé en ce qu'**
on détermine une première grandeur de correction (ora) qui est combinée au signal (S) par un élément d'addition (21).

8. Dispositif selon l'une quelconque des revendications 1 à 6,
**caractérisé en ce qu'**
il est prévu de déterminer une seconde grandeur de correction (fra) qui est combinée au signal (S) par un élément de multiplication (23).

9. Dispositif selon l'une quelconque des revendications précédentes,
**caractérisé en ce que**
après avoir atteint ou dépassé la valeur de seuil (SC1, SC2, SC3), on détermine la grandeur de correction (ora, fra) pour une durée prédéterminée (TD).

10. Dispositif selon l'une quelconque des revendications précédentes,
**caractérisé en ce qu'**
il est prévu une comparaison de la grandeur caractéristique du signal d'entrée (US) et/ou de la grandeur de réglage (fr) et/ou du signal de correction (ora, fra) et/ou d'au moins l'une des valeurs moyennes avec au moins une valeur limite (SC4, SC5) du signal d'entrée (US) et/ou de la grandeur de réglage (fr) et/ou du signal de correction (ora, fra) et/ou d'une de leurs valeurs moyennes, et un signal de défaut est émis lorsqu'on atteint ou dépasse la valeur limite (SC4, SC5).
